# EUROPÄISCHE PATENTSCHRIFT

(11) **EP 1 029 130 B1**
(45) Veröffentlichungstag und Bekanntmachung des Hinweises auf die Patenterteilung: **29.10.2003**
(21) Anmeldenummer: 98951148.0
(22) Anmeldetag: 04.11.1998
(51) Int. Cl.: E02B 3/10, E02B 7/44

(54) **SCHUTZELEMENT, SOLCHE ELEMENTE UMFASSENDE VORRICHTUNGEN SOWIE VERFAHREN ZUM SCHÜTZEN EINES GEBIETES VOR HOCHWASSER ODER LAWINEN**
PROTECTIVE ELEMENTS, DEVICES COMPRISING SAID ELEMENTS AND METHOD FOR PROTECTING A ZONE AGAINST FLOODS AND AVALANCHES
ELEMENTS DE PROTECTION, DISPOSITIFS COMPRENANT DE TELS ELEMENTS ET PROCEDE POUR PROTEGER UNE ZONE CONTRE LES CRUES OU LES AVALANCHES

(30) Priorität: 05.11.1997 CH 255097; 26.08.1998 CH 174598
(43) Veröffentlichungstag der Anmeldung: 23.08.2000
(73) Patentinhaber: Scheibe, Klaus Wolfgang, 8038 Zürich (CH)
(72) Erfinder: Scheibe, Klaus Wolfgang, 8038 Zürich (CH)
(74) Vertreter: EGLI-EUROPEAN PATENT ATTORNEYS
(86) Internationale Anmeldenummer: CH9800472
(87) Internationale Veröffentlichungsnummer: WO99024675

(56) Entgegenhaltungen:
- EP-A- 0 741 205
- EP-A- 0 802 285
- DE-A- 3 502 243
- NL-A- 8 801 251

## Beschreibung

Die Erfindung betrifft, gemäss einem ersten Aspekt und dem Oberbegriff des Anspruchs 1, ein Schutzelement mit einer Platte, welche eine erste Längskante und eine zweite Längskante aufweist, die um eine Distanz (D) voneinander beabstandet sind und welches ein im Wesentlichen parallel zur ersten Längskante und/oder zweiten Längskante angeordnetes und zur Übertragung von Kräften ausgebildetes Drehlager umfasst, mittels welchem die Platte an einer Unterkonstruktion zur Aufnahme von auf das Schutzelement wirkenden Kräften, insbesondere an einer Vorrichtung für Hochwasser- oder Lawinenschutz, und gegenüber dieser Unterkonstruktion in einem Schwenkbereich (S) beweglich anordenbar ist. Ferner betrifft die Erfindung, gemäss weiteren Aspekten, Vorrichtungen für den Hochwasser- oder Lawinenschutz sowie Verfahren zum Schützen eines Gebietes vor Hochwasser oder Lawinen.

Ungünstige klimatische Konstellationen bewirken immer wieder und allzu oft, dass enorme Niederschlagsmengen in kürzester Zeit ganze Gebiete und grosse Teile einzelner Länder in Überschwemmungsgebiete verwandeln. Dabei wird offenkundig, dass existierende Schutzmassnahmen wie Deichanlagen, Verbaumassnahmen, Abfluss- und Objektschutzanlagen oft unzureichend bemessen sind, um den überhöhten Pegelständen standzuhalten und die jeweiligen Wassermengen aufzunehmen.

Verheerende Überschwemmungen wie bspw. die im Oder-Neisse-Gebiet in 1997, China 1998 oder auch jährlich wiederkehrende Hochwasser (z.B. in der Rheinebene bei Köln), mit erheblichen volkswirtschaftlichen Konsequenzen, erfordern Innovationen und Vorausdenken zur entscheidenden Verbesserung und Ergänzung vorhandener bzw. zum Neubau von Hochwasserschutz-Anlagen. Soweit bekannt, konzentrieren sich Neubau- und Sanierungsmassnahmen von Deichanlagen im Wesentlichen auf:
- konsequente Kapazitätsausweitung von Rückhalteräumen
- Stabilisierung erdgeschütteter Dämme mit unterschiedlichsten Massnahmen
- Unterbindung der Aufweichungsgefahr erdgeschütteter Dämme bei Hochwasser und starken Regenfällen
- Vergrösserung der Aufnahmekapazität durch Erhöhung der Deichkrone und Vergrösserung der Basis von Deichanlagen
- Objektschutz bestehender Bebauungen mittels vorübergehend errichteter Behelfsmassnahmen bzw. permanenter neuer Schutzanlagen.

Bei der Ausführung solcher Projekte sind nicht selten Naturschutz (Ökologie), Deichschutz sowie ökonomische Anforderungen einander widersprechend: Deichanlagen und Rückhalteräume werden nach gängigen Lösungen in Kapazität und Ausbildung auf extreme Niederschlags- und Hochwasserverhältnisse sowie auf Pegelhöchststände hin konzipiert und dimensioniert. Verstärkungen und Erhöhungen der Dammprofile (falls dies überhaupt möglich ist) benötigen riesige Erdbewegungen und erfordern das Opfern von grossen Landflächen. Auf Jahre, vielleicht auf Jahrzehnte hinaus ist somit ein Teil der getätigten Investitionen für grosszügig bemessene Rückhalteräume und Eindeichungen quasi ungenutzt bei gleichzeitiger Inkaufnahme beträchtlicher landschaftlicher Nachteile, bspw. in Folge hoher Deichkronen und eines zu grossen Landbedarfs. Es sind deshalb bewegliche bzw. mobile Hochwasserschutzsysteme gefragt, welche bedeutend weniger Land benötigen.

In Köln werden in der Innenstadt seit einiger Zeit als "Kölner Verbau" bekannte, mobile Hochwasserschutzwände installiert. Die dafür benötigten Elemente werden in Zeiten von Normal- bzw. Niedrigwasser in geeigneten Räumen gelagert, damit das touristisch und historisch attraktive sowie städtebaulich wichtige Rheinufer nicht durch diesen Hochwasserschutz städtebaulich permanent nachteilig beeinflusst ist. Im Falle eines Hochwasseralarms müssen, innerhalb der Frist von etwa 24 bis 48 Stunden bis zum Eintreffen des Hochwassers, die Schutzelemente aus dem Lager genommen, an den Einsatzort transportiert und dort fachgerecht installiert werden. Zu diesem Zwecke ist eine ständige, speziell ausgebildete Einsatztruppe erforderlich. Diese Einsatztruppe sowie die Lager-, Transport- und Montagemittel verteuern die Kosten für die Schutzwände erheblich; eine ziemlich lange Reaktionszeit auf eine akute, kurzfristige Hochwassergefahr hin kann als weiterer Nachteil dieses Systems angesehen werden.

Aus EP 0 741 205 A1 ist ein bewegliches bzw. mobiles Hochwasserschutzsystem bekannt, bei welchem Schutzelemente einfach von einer horizontalen in eine vertikale Lage geschwenkt oder hochgestellt eingebaut werden können. Dieses System weist in einer ersten Ausführungsform eine Aufnahmekammer, welche in eine flutbare Schwimmkammer und eine Einschwenkkammer unterteilt ist, und ein oder mehrere Wandelemente auf. Die Wandelemente selbst bestehen aus einem in die Schwimmkammer einschwenkbaren und durch Hochwasser Auftrieb erfahrenden Pontonteil und einem in die Einschwenkkammer einsenkbaren Kontergewichtsteil sowie aus einem, beispielsweise als Spundwand ausgebildeten, Stützelement in dessen Kopfbereich die Wandelemente schwenkbar gelagert sind. In einer zweiten Ausführungsform weist das System in eine Verankerung einklinkbare Wandelemente auf. Bei beiden vorgeschlagenen Systemen könnte als Nachteil angesehen werden, dass die Kräfte, welche durch das gestaute Wasser auf die Schutzwände wirken, ungünstig verteilt werden, indem diese praktisch nur am Drehpunkt der Schutzwand und an deren unterer Dichtung angreifen. Das komplette Zurückschwenken der Wandelemente gemäss der ersten Ausführungsform kann durch in der dem Hochwasser zugewandten Schwimmkammer angesammelter Schmutz zudem erheblich erschwert werden. Überdies ist die Dichtheit der Schutzwand bei nur niedrigem Hochwasserstand nicht unbedingt gewährleistet: So kann - insbesondere bei der zweiten Ausführungsform - der hydrostatische Druck die Dichtung am unteren Ende der Schutzwand von der Spundwand trennen, falls der Wasserstand zu niedrig ist, um diesen Druck mittels des Staudruckes, der oberhalb des Bolzens auf die Schutzwand wirkt, zu übertreffen.

Lawinenverbauungen sind in allen Alpenländern Europas bekannt und bewirken zumeist das Abreissen einer Schneelawine. Eine Verunstaltung der Landschaft durch die oft grossflächigen, weithin als horizontale Reihen erkennbaren Lawinenverbauungen wird, wegen der Schutzwirkung dieser oft überlebenswichtigen Anlagen, gezwungenermassen in Kauf genommen.

Mit der fortlaufenden Erwärmung der Erdoberfläche einher geht die Verschiebung der Permafrostgrenze gegen grössere Höhen über Meer. Dies hat unter anderem zur Konsequenz, dass viele durch den Permafrost (ganzjähriger Dauerfrost) über Jahrhunderte stabilisierte Bergflanken plötzlich unstabil werden und abrutschen können; Erdrutsche bzw. Gerölllawinen in bisher ungefährdeten Gebieten könnten die Folge sein. Speziell mit der eintretenden Schneeschmelze (meist im Frühsommer) steigt die Gefahr des Auftretens von solchen Gerölllawinen. Entsprechende Schutzmassnahmen sind bisher nicht bekannt.

Die Aufgabe der Erfindung besteht darin, ein Schutzelement sowie Vorrichtungen und Verfahren zum Schützen eines Gebietes vor Hochwasser oder Lawinen vorzuschlagen, mit welchem die aufgezeigten Probleme im Stand der Technik überwunden bzw. alternative Lösungen angeboten werden können.

Die Aufgabe wird, gemäss einem ersten Aspekt, durch die Merkmale des unabhängigen Anspruchs 1 gelöst, indem das eingangs erwähnte Schutzelement dadurch gekennzeichnet ist, dass das Drehlager dichtend ausgebildet ist und - zum Ausgleichen von auf die Platte bzw. das Lager wirkenden Kräften - maximal um einen Viertel der Distanz (D) von einer zwischen der ersten und zweiten Längskante, im Wesentlichen parallel zu den Längskanten verlaufenden geometrischen Achse bzw. Schwerachse der Platte beabstandet angeordnet ist. Gemäss weiteren Aspekten wird die Aufgabe durch eine Vorrichtung für den Hochwasser- oder Lawinenschutz, entsprechend Anspruch 5, sowie durch ein Verfahren zum Schützen eines Gebietes vor Hochwasser oder Lawinen, entsprechend Anspruch 17, gelöst. Bevorzugte erfindungsgemässe Weiterbildungen des Schutzelements, der Vorrichtung bzw. des Verfahrens ergeben sich aus den abhängigen Ansprüchen.

Das erfindungsgemässe Schutzelement bzw. Vorrichtungen, welche eines oder mehrere solcher Schutzelemente umfassen, sind in verschiedenen Ausführungsformen, die nur als Illustration und nicht als Einschränkung zu verstehen sind, in den Figuren schematisch dargestellt. Dabei zeigen:
- Fig. 1: Einen Querschnitt durch ein Schutzelement auf senkrechter Unterkonstruktion, in Grundstellung;
- Fig. 2: Einen Querschnitt durch ein Schutzelement auf senkrechter Unterkonstruktion, in Schutzstellung;
- Fig. 3: Einen Querschnitt durch ein Schutzelement auf senkrechter Unterkonstruktion, in Sonnenenergieaufnahmestellung;
- Fig. 4: Einen Querschnitt durch eine Vorrichtung für den Hochwasserschutz mit einer Reihe von Schutzelementen in Grundstellung und mit einseitig abgeschrägter Unterkonstruktion sowie Kanal;
- Fig. 5: Einen Querschnitt durch eine Vorrichtung für den Hochwasserschutz mit zwei Reihen von Schutzelementen in Grundstellung und mit senkrechter sowie einseitig abgeschrägter Unterkonstruktion mit Kanälen;
- Fig. 6: Einen Querschnitt durch eine Vorrichtung für den Hochwasserschutz mit einer Reihe von Schutzelementen mit Bogenstützen in höchster Schutzstellung und waagrechter Unterkonstruktion;
- Fig. 7: Einen Querschnitt durch einen verschränkten Stoss zwischen zwei Schutzelementen für den Hochwasserschutz;
- Fig. 8: Einen Querschnitt durch einen stumpfen Stoss zwischen zwei Schutzelementen für den Hochwasserschutz;
- Fig. 9: Eine Teilansicht einer Vorrichtung für den Hochwasserschutz mit einer Reihe von Schutzelementen in Schutzstellung, bei dem Geländeverlauf entsprechender, unterschiedlicher Stauhöhe.

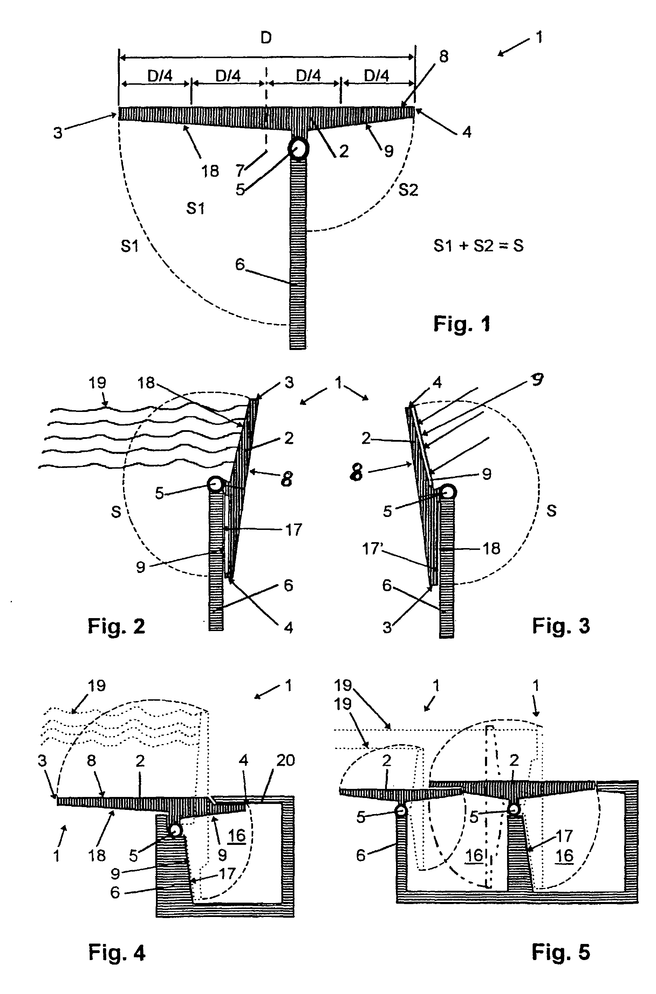

Figur 1 zeigt ein Schutzelement 1 einer ersten Ausführungsform im Querschnitt. Dieses Schutzelement umfasst eine Platte 2 mit einer ersten Längskante 3 und einer zweiten Längskante 4 und ist mittels eines Drehlagers 5 an einer hier senkrecht ausgebildeten Unterkonstruktion 6 befestigt. Diese Unterkonstruktion ist vorzugsweise Bestandteil einer Vorrichtung zum Schutz gegen Hochwasser oder Lawinen. Die beiden Längskanten 3, 4 sind um eine Distanz D voneinander beabstandet. Das Drehlager 5 ist zur Aufnahme von auf das Schutzelement wirkenden Kräften ausgebildet und gegenüber dieser Unterkonstruktion 6 in einem Schwenkbereich S beweglich angeordnet. Das Drehlager 5 ist, für den Hochwasserschutz und für den Lawinenschutz (Schnee- oder Schlammlawinen) dichtend ausgebildet. Die dichtende Ausbildung des Drehlagers umfasst alle dem Fachmann geläufigen Möglichkeiten und Techniken, insbesondere das Ausführen eines in sich dichtenden oder eines an einer Dichtung gleitenden Drehlagers bzw. das Vorsehen einer am äussern Mantel des Drehlagers gleitend anliegenden Dichtung, welche an der Unterkonstruktion 6 befestigt ist. Zur Verhinderung von Steinlawinen kann auf die Dichtung des Drehlagers verzichtet werden. Zu der im Wesentlichen parallel zu den Längskanten 3,4 verlaufenden Schwerachse 7 wird ein Bereich angenommen, der zweimal dem Mass D/4 bzw. der dem Mass D/2 entspricht und durch in etwa dessen Mitte die Schwerachse 7 verläuft. In diesem Bereich ist das Drehlager 5 der Platte 2 so angeordnet, dass es maximal um D/4 von der Schwerachse entfernt und somit auch mindestens um D/4 von den Längskanten 3, 4 beabstandet verläuft. Das Schutzelement 1 weist eine erste Oberfläche 8 auf, welche bevorzugt begehbar oder auch befahrbar ausgebildet ist. Eine zweite Oberfläche 9 kann Sonnenkollektoren 10 (vgl. Fig. 2 und 3), wie fotovoltaische Zellen oder Vorrichtungen zur Wärmeaufnahme und Wärmespeicherung umfassen. Eine dritte Oberfläche 18 ist als Schutzfläche ausgebildet. Insbesondere bei schnell fliessenden Gewässern können durch die enorme kinetische Energie des Schwemmgutes erhebliche Schäden an Wehren auftreten. Für den Hochwasserschutz ist deshalb die dritte Oberfläche 18 der Platte 2 vorzugsweise glatt ausgebildet, das heisst möglichst ohne Strukturierung der Oberfläche hergestellt; so kann das Schutzelement und die Hochwasserschutzvorrichtung wesentlich weniger durch gegen diese Schutzfläche prallendes Schwemmgut beschädigt werden. Im Lawinenschutz dagegen kann eine Oberflächenstrukturierung aus optischen Gründen (Kaschierung) erwünscht sein.

Figur 2 zeigt einen Querschnitt durch ein Schutzelement 1 entsprechend der Fig. 1. Die Platte 2 wurde um das Drehlager 5 in die Schutzstellung geschwenkt. Die zweite Oberfläche 9 liegt vorzugsweise auf einer relativ grossen Oberfläche 17 der Unterkonstruktion 6 auf, damit die Kräfte, welche durch Hochwasser oder Schnee und Eis auf die Oberfläche 18 ausgeübt werden, möglichst gleichmässig und damit die Konstruktion schonend auf den Teil 17 der Unterkonstruktion 6 übertragen werden. Die kraftübertragende Fläche kann die ganze zweite Oberfläche 9 umfassen oder es können, über die zweite Oberfläche verteilt, beispielsweise erhöhte Stege oder Zapfen zu diesem Zweck ausgebildet sein. Insbesondere falls die zweite Oberfläche mit Sonnenkollektoren ausgestattet ist, werden solche Stege oder Zapfen bevorzugt, weil damit der Beschädigung der Sonnenkollektoren vorgebeugt werden kann. Die erste Oberfläche 8 ist bei dieser ersten Ausführungsform eines Schutzelements 1 dem Hochwasser bzw. dem Schnee und Eis oder dem Geröll abgewendet.

Figur 3 zeigt einen Querschnitt durch ein Schutzelement 1 gemäss einer ersten Ausführungsform, entsprechend den Figuren 1 und 2. Die Platte 2 ist um das Drehlager 5, mittels welchem sie auf der hier senkrechten Unterkonstruktion 6 einer Vorrichtung für den Hochwasser- oder Lawinenschutz angeordnet ist, in die Sonnenenergieaufnahmestellung geschwenkt. Die dritte Oberfläche 18 liegt auf einem Teil 17' der Unterkonstruktion 6 auf, die zweite Oberfläche mit den Sonnenkollektoren ist zweckmässigerweise der Sonne zugewendet. Zum Erreichen eines möglichst optimalen Einstrahlwinkels kann die Platte 2 - wie dargestellt - im Querschnitt so ausgebildet sein, dass sie gegen die Längskanten 3, 4 hin in der Dicke abnimmt; so kann ein Schwenkwinkel S1 (vgl. Fig. 1) von mindestens 90° erreicht werden. Ein rechteckiger Querschnitt hat dagegen den Vorteil einer möglichen kostengünstigeren Herstellung einer Platte 2; der Schwenkbereich kann dann aber kaum mehr als 90° betragen.

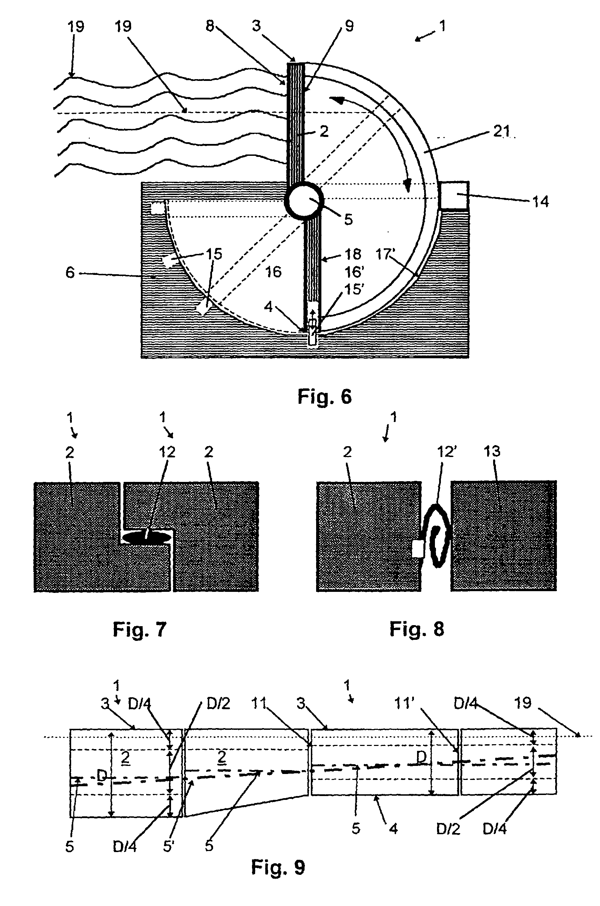

Die gezeigte Lage der Drehachse 5 hat den Vorteil, dass das Schutzelement 2 gewichtsausgleichend konstruiert sein kann. So kann durch gleiche Länge der beiden über das Drehlager hinausreichende Plattenteile und/oder durch gleiches Gewicht eine recht genaue Austarierung des Schutzelementes erreicht werden. Damit lässt sich ein erfindungsgemässes Schutzelement leicht mittels einer Antriebsvorrichtung oder direkt von Hand aus der dargestellten Grundstellung in eine Schutzstellung (siehe Fig. 2) oder Sonnenenergieaufnahmestellung (siehe Fig. 3) schwenken. Des Weiteren hat diese Anordnung des Drehlagers 5 in einem mittleren Bereich des Schutzelements 2 den Vorteil, dass die vom Hochwasser, von Schnee und Eis oder Geröll auf die Platte wirkenden Kräfte auf einen relativ grossen Teil 17, 17' der Unterkonstruktion 6 verteilt werden kann. Zudem werden mit der erfindungsgemässen Anordnung des Drehlagers die auf das Drehlager wirkenden Zugkräfte minimiert. Die Unterkonstruktion kann mit bekannten Mitteln abgedichtet und zur Aufnahme der anfallenden Kräfte verstärkt werden. Die Platte 2 des Schutzelements 1 kann - von den Darstellungen in den Fig. 1 - 3 abweichend - nicht gegen die Längskanten 3, 4 verjüngt, sondern mit einem beliebigen Querschnitt, z.B. rechteckig, konkav oder konvex, ausgebildet sein. Es ist von Vorteil, die Platte 2 in jeder beliebigen, zumindest aber in bevorzugten Positionen zu arretieren; deshalb weist die bevorzugte Vorrichtung zum Hochwasser- oder Lawinenschutz Arretiermittel 15, 15' (vgl. Fig. 6) auf, welche z.B. an der Platte 2 und/oder an der Unterkonstruktion 6 angeordnet sind.

Figur 4 zeigt einen Querschnitt durch eine Vorrichtung für den Hochwasserschutz mit einer Reihe von Schutzelementen 1 in Grundstellung (ausgezogen) bzw. Schutzstellung (gestrichelt). Die als begeh- bzw. befahrbare Terrasse nutzbare erste Oberfläche 8 der Platte 2 wird im Falle eines zu erwartenden Hochwassers um 90° um das Drehlager 5, welches auf der Unterkonstruktion 6 befestigt ist, geschwenkt. In der daraus resultierenden Schutzposition liegt die zweite Oberfläche 9, welche hier keine Sonnenkollektoren aufweist, vorzugsweise flächig auf dem entsprechenden Teil 17 der Unterkonstruktion 6 auf. Hier wurde diese Unterkonstruktion als Spundwand ausgebildet, deren Stärke gegen den Fuss der Wand zunimmt. Daraus resultierte eine einseitig abgeschrägte Unterkonstruktion, deren Neigungswinkel vorzugsweise mit dem Winkel der Verjüngung der Platte 2 übereinstimmt. In der gezeigten Grundstellung liegt die Platte mit einem Teil der glatten dritten Oberfläche 18 auf der Mauerkrone der Spundwand bzw. Unterkonstruktion 6, die entsprechend ausgebildet bzw. verstärkt ist, auf. Gleichzeitig ist auf der Schutzseite der Vorrichtung für den Hochwasserschutz ein Kanal 16 ausgebildet. Eine Kragplatte 20 deckt einen Teil der ersten Oberfläche 8 der Platte 2 ab und hindert damit die Platte am Kippen. In der Schutzstellung schliesst die um 90° geschwenkte, im Wesentlichen senkrecht stehende erste Oberfläche 8 beinahe an die Kragplatte 20 an. Aus Fig. 4 geht auch hervor, dass durch die gezeigte, spezielle Querschnittsform der Platte 2 eine gewichtsausgleichende Konstruktion gewählt wurde. Die Schutzfläche 18 ist um einiges grösser als die Andruckfläche 9, weil die Längskante 3 weiter vom Drehlager entfernt ist als die Längskante 4. Zum zumindest annähernden gewichtsmässigen Austarieren der Platte 2 weist hier deshalb der nach unten schwenkbare Teil der Platte eine grössere Dicke auf, so dass das Volumen demjenigen des nach oben schwenkbaren Teils entspricht. Dem Fachmann ist jedoch klar, dass der Ausgleich der beiden Volumina hauptsächlich bei Platten mit Vollprofil eingesetzt werden kann; bei Platten mit Hohlprofil wird er im nach unten schwenkenden Teil gegebenenfalls ein Gegengewicht platzieren und/oder diesen Teil mit entsprechend gewichtigeren Konstruktionsgliedern versehen.

Der Kanal ist durch die Ausbildung einer. Vorrichtung für den Hochwasser- oder Lawinenschutz entsprechend Figur 4 in beiden Endlagen der Platte 2 praktisch abgeschlossen ausgebildet und ermöglicht so die vor äusseren Einflüssen wie Wetter, Tieren oder auch Vandalen geschützte Zu- und/oder Ableitung von Medien wie Gase oder Elektrizität und/oder Flüssigkeiten wie Wasser für die Betätigung der Antriebsvorrichtung oder abzuführendes Wasser aus dem Gewässer (Überlauf) oder der geschützten Umgebung (Meteorwasser). Ausserdem kann der Kanal für die ebenso vor äusseren Einflüssen geschützte Unterbringung der Antriebsvorrichtung für die Platte sowie für deren Wartungs- und Bedienungszwecke genutzt werden.

Figur 5 zeigt einen Querschnitt durch eine Vorrichtung für den Hochwasserschutz mit zwei Reihen von Schutzelementen 1 in Grundstellung (ausgezogen), mit einer oder beiden Platten in Schutzstellung (gestrichelt) bzw. mit einer Platte in Sonnenenergieaufnahmestellung (strichpunktiert). Die Platten 2 sind so in zwei oder mehr Reihen angeordnet, dass sie durch Verschwenken zwei oder mehr Hochwasser- oder Lawinenschutz-Wände bilden. Wie aus dieser Figur hervorgeht, kann der Anschluss von einer Platte zur nächsten überlappend bzw. der Anschluss von einer Platte zur Unterkonstruktion stumpf sein. Auch eine gegenteilige Ausführung ist möglich. Ebenso ist der Fachmann mit der Ausbildung der Unterkonstruktion 6 weitgehend frei, so dass diese senkrecht, einseitig oder auch beidseitig abgeschrägt ausgebildet sein kann. Bevorzugt sind Unterkonstruktionen 6 mit Kanälen 16, die auf der Schutzseite der Platte 2 bzw. des Drehlagers 5 angeordnet sind. Durch die bevorzugte, praktisch abgeschlossene Ausbildung des Kanals 16 werden Drehlager 5, Antriebsvorrichtungen 14, Arretiermittel 15,15' und alle anderen wichtigen Installationen vor äusseren Einflüssen, wie Wetter, Pflanzen, Tieren oder auch Vandalen geschützt. Wie ebenfalls aus der Figur 4 hervorgeht, brauchen die Platten 2 nicht genau um 90° geschwenkt zu werden, der Schwenkwinkel S2 (Schutzstellung) und der Schwenkwinkel S1 (Sonnenenergieaufnahmestellung) kann grösser als 90°, beispielsweise 100° sein.

Figur 6 zeigt eine zweite Ausführungsform des erfindungsgemässen Schutzelements 1. Den erhöhten Anforderungen des Küstenschutzes infolge starker Brandungskräfte entsprechend weist diese zweite Ausführungsform ein Drehlager 5 auf, dessen Drehachse im wesentlichen mit der Schwerachse des Schutzelementes identisch ist. Vorzugsweise sind die zweite Oberfläche 9 und dritte Oberfläche 18 der Platte mit einer Reihe von Bogenstützen 21 ausgerüstet, so dass in jeder beliebigen Schutzstellung, das heisst bei jedem Schwenkwinkel zwischen 10° und 100° die durch das Hochwasser auf einen Teil der ersten Oberfläche 8 des Schutzelements 1 wirkenden Kräfte durch das Lager 5 auf den waagrechten Teil der Unterkonstruktion 6 und über die Bogenstützen 21 auf den entsprechend tonnenförmig ausgebildeten Teil 17' der Unterkonstruktion 6 übertragen werden. Die Bogenstützen 21 können über in der Unterkonstruktion 6 gelagerte Rollen geführt sein bzw. selbst über auf der Unterkonstruktion abrollende Lager verfügen. Durch eine Antriebsvorrichtung 14, welche auf die Bogenstützen wirkt, kann das Schutzelement von Hand oder mittels eines Motors in jede beliebige Stellung gebracht werden. Es ist - wie auch bei der ersten Ausführungsform - möglich, eine Platte oder eine bestimmte Anzahl von Platten automatisch bzw. über ein Frühwarnsystem in die Schutzposition zu schwenken. Das Anordnen von Arretiermitteln in Form von Vertiefungen 15 bzw. beweglichen Bolzen 15' jeweils in der Unterkonstruktion 6 bzw. in der zweiten Längskante 4 des Schutzelements 1 (oder auch umgekehrt) ermöglicht das Arretieren des Schutzelements 1 in jeder beliebigen, zumindest aber in besonders bevorzugten Lagen. Auf diese Weise kann die Schutzhöhe jederzeit den Gegebenheiten bzw. dem Wasserstand angepasst werden: Eine grundsätzliche Schutzstellung der Schutzelemente 1 für den Höchstwasserstand entfällt damit bei geringem Hochwasser.

Wie aus den Figuren 4 bis 6 hervorgeht, ist die der Erfindung zugrunde liegende Systemlösung, ein Systembauelement bzw. ein Schutzelement 1, welches im Wesentlichen aus einer Platte 2 und einem mit der Unterkonstruktion 6 fest verbundenen bzw. verbindbaren Drehlager 5 besteht. Die multifunktionale Ausbildung erlaubt eine baulich flexible Anlage mit Mehrfachnutzung: Im Normalfall ist die erste Oberfläche 8 einer Platte 2 bzw. einer Anzahl Platten 2 im Wesentlichen horizontal ausgerichtet, so dass die erste Oberfläche 8 der Platten als Gehweg oder Fahrstrasse benutzt werden kann. Dies kann sowohl in hochwasser- als auch in lawinen- oder steinschlaggefährdeten Regionen der Fall sein. In Zeiten intensiver Sonneneinstrahlung können die Platten, falls sie mit Sonnenkollektoren ausgestattet sind, in die Sonnenenergieaufnahmestellung geschwenkt werden. Mittels Fotovoltaikelementen kann so direkt elektrische Energie produziert werden. Der Gegenstand der Erfindung eignet sich sowohl für den Bau von Vorrichtungen für den Hochwasser- oder Lawinenschutz mit einer, zwei oder mehr hintereinander angeordneten Schutzwänden, für Be- und Entwässerungsaufgaben, als auch grossflächig zur Befestigung und Installation von Solar- und Fotovoltaikanlagen zwecks permanenter Energiegewinnung.

Zu Hochwasserzeiten (die Wasserhöchststände sind in den Figuren 2, 4, 5, 6 und 9 mit "19" bezeichnet) mittels Kipp- oder Schwenkvorrichtung in eine annähernd vertikale Position gedreht und arretiert, ist das Drehelement bzw. die Platte 2 wirksamer, massiver Hochwasserschutzverbau. Das Schutzelement 1 eignet sich sowohl für neu zu schaffende Rückhaltebecken und -räume wie auch zur Sanierung und Vergrösserung von bestehenden Deichanlagen und Rückhalteräumen. Dies ist möglich ohne Mehrbedarf an Land und ohne Veränderung der Deichgeometrien. Im Falle von neu zu schaffenden Hochwasserschutz-Zonen und Rückhalteräumen ist lediglich ca. 1/5 bis 1/10 des sonst für Deichbauten üblichen Landbedarfs erforderlich. Deichkronen, mit derartigen Anlagen ausgestattet, können in kürzester Zeit durch Aufrichten der Schutzelemente 2 mit grösserem Speichervolumen den erhöhten Pegelständen angepasst werden. So wird auch bei Extremhochwasser wirksamer Schutz gegen Überflutung des Umlandes oder gar der besiedelten Räume geboten.

Die Figuren 7 bzw. 8 zeigen einen Querschnitt durch einen verschränkten bzw. stumpfen Stoss zwischen zwei Schutzelementen für den Hochwasserschutz. Der Anschluss eines aufgerichteten Schutzelementes an eine weitere Baueinheit 13, beispielsweise an eine bestehende Spund- oder Deichwand, eine Stützmauer (z.B. bei einer Strassenunterführung oder einem Tunnel) oder auch eine andere permanente Baute für den Hochwasserschutz kann dabei auf gleiche Weise geschehen wie die Abdichtung zwischen zwei Platten 2. In Zeiten der Hochwassergefahr werden Entriegelungs- und Kippvorrichtungen ausgelöst und die Schutzelemente 1 entweder automatisch mittels Antriebssystem bzw. manuell oder mittels Gewichtsverlagerung in die gewünschte Schutzposition gedreht. Proportional zum steigenden Pegelstand wächst dann der hydrostatische Druck gegen die aufgekippten Elemente, wodurch die in den Fugen zwischen den Schutzelementen gelagerten Dichtelemente 12, 12' bzw. Dichtungsbänder wasserdicht verpresst werden. Ist eine Deichanlage mit einer erfindungsgemässen Vorrichtung ausgestattet, bewirkt die höhere Anstauung des Wassers im Falle von Hochwasser eine stark zunehmende Belastung der Deichanlage in ihrer ursprünglich unveränderten Geometrie. Die Kraftübertragung erfolgt bevorzugt über konstruktive Ausführungen mittels eines landseitig oder schutzseitig angeordneten Kanals 16, in den hinein sich die Drehbewegung der Schutzelemente vollzieht. Diese Ausführungsform wird zweckmässigerweise durch lastabtragende Unterkonstruktionen, wie eine Schlitzwände, Bohrpfähle und Wandschürzen ergänzt, welche überdies dem Zweck der Beeinflussung bzw. Beherrschung des Sickerlinienverlaufs dienen.

Figur 9 zeigt die Teilansicht einer Vorrichtung für den Hochwasserschutz. Dem Geländeverlauf entsprechend sind verschiedene Drehlager 5 auf unterschiedlicher Höhe, treppenartig angeordnet. Alternativ dazu kann ein längeres Drehlager 5' auch schiefliegend angeordnet werden. Beiden Ausführungsformen gemeinsam ist, dass mit einer Reihe von Schutzelementen in Schutzstellung eine unterschiedliche Stauhöhe erreicht werden kann. Alle Schutzelemente 1 weisen eine erste bzw. zweite Längskante 3 sowie zwei Seitenkanten 11,11' auf. Für eine leichte Bewegbarkeit der Platten ist dabei wesentlich, dass das Drehlager 5,5' von der Schwerachse 7 (hier nicht eingezeichnet) nicht weiter als um das Mass D/4 entfernt angeordnet ist. Es kann nun jede Platte einzeln aufgerichtet werden. Um möglichst wenig Antriebsvorrichtungen einsetzen zu müssen, oder um eine ausgefallene Antriebsvorrichtung zu überbrücken, können aber auch zwei oder mehrere Platten 2, beispielsweise mittels Bolzen, miteinander verbunden und zusammen in die Schutzposition geschwenkt werden. So kann durch eine einzelne, direkt angetriebene Platte 2 eine Vielzahl von Platten 2 gemeinsam verschwenkt werden.

Abweichend von der Ausführung und Beschreibung der Arretiermittel 15,15' in Fig. 6 können alle in Stand der Technik bekannten Arretiermittel, wie Klammern, Haken, Abstützungen usw. für alle Ausführungsformen des Schutzelements 1 bzw. der Vorrichtung für den Hochwasser- oder Lawinenschutz vorgesehen werden. Diese Arretiermittel können manuell oder mechanisch bzw. automatisch bewegt bzw. ausgelöst werden.

Die Ausführung der erfindungsgemässen Schutzelemente bzw. der Vorrichtungen für den Hochwasser- oder Lawinenschutz kann sämtliche in den Figuren abgebildeten und/oder beschriebenen Konstruktions- bzw. Anordnungsformen in beliebiger Kombination umfassen.

Als Baumaterialien für die Platten 2 kommen Materialien wie Beton, Stahl, Gusseisen, Leichtmetalle, Glas oder auch Kunststoffe (z.B. GFK) und deren beliebige Kombinationen in Frage. Die Schutzelemente können also einstückig gespritzt oder gegossen oder auch z.B. fachwerkartig aus Einzelteilen zusammengesetzt sein. Als Antriebsvorrichtungen werden Elektromotoren oder mit organischen Flüssigkeiten oder Gasen betriebene Motoren, Hydraulikantriebe, Pressluftantriebe oder auch mit Wasser zu füllende Gegengewichte bevorzugt. Die Elemente können aber auch von Hand oder mit externen mechanischen Mitteln wie Motorfahrzeugen, Kranen oder ähnlichem bewegt werden.

Eine ökonomisch noch bessere Ausbeute an elektrischer Energie wäre dann gewährleistet, wenn der Ablauf des Hochwassers von zwei oder mehreren nacheinander angeordneten Überlauf- oder Rückhalteräumen mit unterschiedlichen Höhenlagen über eine Turbinen-Genarator-Kombination geleitet würde.

Vorteile der erfindungsgemässen Schutzelemente, Vorrichtungen bzw. Verfahren umfassen:
- Die Anordnung des Drehlagers 5,5' in einem Abstand von höchstens D/4 von der Schwerlinie 7 der Platten ermöglicht das Austarieren und gleichzeitige Bewegen von mehreren oder sehr grossen bzw. schweren Schutzelementen von Hand oder mittels wenigen Antrieben.
- Die Kopplung von mehreren Schutzelementen 1 erlaubt eine grössere Freiheit bei der Zuordnung von Schutzelementen zu einer Antriebsvorrichtung, dies auch im Falle des Ausfallens einer Antriebsvorrichtung.
- Eine kostengünstige Sanierung und Kapazitätssteigerung bestehender Deich- und Wehranlagen sowie die Erstellung entsprechender neuer Vorrichtungen für den Hochwasser- oder Lawinenschutz werden ohne zusätzlichen Landbedarf ermöglicht.
- Eine Ausrüstung solcher Vorrichtungen und Anlagen mit Solar- bzw. Fotovoltaik-Technik erlaubt eine permanente Energiegewinnung und zumindest teilweise Refinanzierung derselben.
- Die Energieversorgung der sonst vom Hochwasser bedrohten Siedlungsräume kann durch Mehrfachnutzung der Deichanlagen als Wehranlagen einerseits und Speicherrückhaltebecken andrerseits - unter Kombination mit entsprechenden Energieerzeugungsanlagen - ergänzt werden.
- Die Erstellung von saisongerechten Schutzvorrichtungen gegen Schnee-, Eis- und/oder Gerölllawinen ermöglicht die Sicherung von insbesondere touristisch genutzten Gegenden, ohne dass die Landschaft das ganze Jahr über sichtbar beeinträchtigt wird.

## Patentansprüche

1. Schutzelement (1) mit einer Platte (2), welche eine erste Längskante (3) und eine zweite Längskante (4) aufweist, die um eine Distanz (D) voneinander beabstandet sind und welches ein im Wesentlichen parallel zur ersten Längskante und/ oder zweiten Längskante angeordnetes und zur Übertragung von Kräften ausgebildetes Drehlager (5,5') umfasst, mittels welchem die Platte (2) an einer Unterkonstruktion (6) zur Aufnahme von auf das Schutzelement wirkenden Kräften, insbesondere an einer Vorrichtung für Hochwasser- oder Lawinenschutz, und gegenüber dieser Unterkonstruktion (6) in einem Schwenkbereich (S) beweglich anordenbar ist, **dadurch gekennzeichnet, dass** das Drehlager (5,5') dichtend ausgebildet ist und - zum Ausgleichen von auf die Platte (2) bzw. das Lager (5,5') wirkenden Kräften - maximal um einen Viertel der Distanz (D) von der zwischen der ersten und zweiten Längskante, im Wesentlichen parallel zu den Längskanten (3,4) verlaufenden Schwerachse (7) der Platte (2) beabstandet angeordnet ist.

2. Schutzelement (1) gemäss Anspruch 1, **dadurch gekennzeichnet, dass** eine erste Oberfläche (8) der Platte (2) begehbar bzw. befahrbar ausgebildet ist.

3. Schutzelement (1) gemäss Anspruch 1, **dadurch gekennzeichnet, dass** auf einer ersten (8) bzw. zweiten (9) Oberfläche der Platte (2) Sonnenkollektoren (10) angeordnet sind.

4. Schutzelement (1) gemäss einem der vorhergehenden Ansprüche, **dadurch gekennzeichnet, dass** die Platte (2) Seitenkanten (11, 11') umfasst, entlang derer Dichtelemente (12) so angeordnet sind, dass die Platte (2) zu einer direkt benachbarten Platte (2) oder Baueinheit (13) eine im Wesentlichen wasserdichte Verbindung eingehen kann.

5. Vorrichtung für den Hochwasser- oder Lawinenschutz mit einer Unterkonstruktion (6), **dadurch gekennzeichnet, dass** zumindest ein Schutzelement (1) nach einem oder mehreren der Ansprüche 1 bis 4 mittels des Drehlagers (5,5') an der Unterkonstruktion angeordnet ist.

6. Vorrichtung gemäss Anspruch 5, **dadurch gekennzeichnet, dass** der gesamte Schwenkbereich (S) des Schutzelements (1) einen Winkel zwischen 10° und 200° umfasst.

7. Vorrichtung gemäss Anspruch 5, oder 6, **dadurch gekennzeichnet, dass** der gesamte Schwenkbereich (S) des Schutzelements (1) einen Winkel zwischen +100° und -100°, ausgehend von einer Ruheposition umfasst.

8. Vorrichtung gemäss Anspruch 5, 6 oder 7, **dadurch gekennzeichnet, dass** der gesamte Schwenkbereich (S) des Schutzelements (1) grösser als 90° ist.

9. Vorrichtung gemäss einem der Ansprüche 5 bis 8, **dadurch gekennzeichnet, dass** die Platte (2) mit einer Antriebsvorrichtung (14) zum Bewegen der Platte wirkverbunden ist.

10. Vorrichtung gemäss einem der Ansprüche 5 bis 9, **dadurch gekennzeichnet, dass** sie Arretiermittel (15, 15') aufweist, mit welchen die Platte (2) gegenüber der Unterkonstruktion (6) in beliebiger Schwenkposition arretierbar ist.

11. Vorrichtung gemäss einem der Ansprüche 5 bis 10, **dadurch gekennzeichnet, dass** sie einen Kanal (16,16') für die Zu- bzw. Ableitung von Medien und/oder Flüssigkeiten sowie für Wartungs- und Bedienungszwecke umfasst.

12. Vorrichtung nach Anspruch 11, **dadurch gekennzeichnet, dass** der Kanal (16,16') zumindest einen Teil des Schwenkbereiches (S) der Platte (2) umgibt.

13. Vorrichtung gemäss Anspruch 11 oder 12, **dadurch gekennzeichnet, dass** eine manuell oder motorisch betätigte Antriebsvorrichtung (14) zum Bewegen der Platte (2) im Kanal (16,16') bzw. im oder am Drehlager (5,5') angeordnet ist.

14. Vorrichtung gemäss Anspruch 11, 12 oder 13, **dadurch gekennzeichnet, dass** der Kanal (16) zumindest einen Teil der Platte (2) und die Antriebsvorrichtung (14) in jeder Schwenkposition so umgibt, dass der Kanal im Wesentlichen abgeschlossen ist.

15. Vorrichtung gemäss einem der Ansprüche 5 bis 14, **dadurch gekennzeichnet, dass** die Platten (2) so in einer Reihe angeordnet sind, dass sie durch Verschwenken eine Hochwasser- oder eine Lawinenschutz-Wand bilden.

16. Vorrichtung gemäss einem der Ansprüche 5 bis 14, **dadurch gekennzeichnet, dass** die Platten (2) so in zwei oder mehr Reihen angeordnet sind, dass sie durch Verschwenken zwei oder mehr Hochwasser- oder Lawinenschutz-Wände bilden.

17. Verfahren zum Schützen eines Gebietes vor Hochwasser oder Lawinen, nach welchem ein Schutzelement, gemäss einem oder mehreren der Ansprüche 1 bis 4, bzw. eine Anzahl solcher Schutzelemente, das bzw. die an einer Vorrichtung für den Hochwasser- oder Lawinenschutz gemäss einem der Ansprüche 5 bis 16 angeordnet sind, um ein Drehlager (5,5') in eine Schutzposition geschwenkt wird, in der jeweils eine zweite Oberfläche (9) der Platte (2) bzw. der Platten (2) einem Teil (17, 17') einer Unterkonstruktion (6) der Vorrichtung so anliegt, dass die Kräfte, welche das Hochwasser oder der Schnee auf eine weitere Oberfläche (8, 18) der Platte ausüben kann, im Wesentlichen gleichmässig auf den Teil (17, 17') der Unterkonstruktion (6) übertragen werden.

18. Verfahren nach Anspruch 17, **dadurch gekennzeichnet, dass** die eine Platte (2) oder eine Anzahl von Platten (2) automatisch bzw. über ein Frühwarnsystem in die Schutzposition geschwenkt werden.

19. Verfahren nach Anspruch 17 oder 18, **dadurch gekennzeichnet, dass** eine Anzahl von Platten (2) miteinander verbunden und zusammen in die Schutzposition geschwenkt werden.

## Claims

1. Protective element (1) having a plate (2) which has a first longitudinal edge (3) and a second longitudinal edge (4), the edges being spaced apart from each other by a distance (D), and the protective element including a pivot bearing (5, 5') which is arranged essentially parallel to the first longitudinal edge and/or second longitudinal edge, is designed for transmitting forces and by means of which, in order to absorb forces acting on the protective element, the plate (2) can be arranged on a substructure (6), in particular on a device for protecting against floods or avalanches, and such that it can move with respect to this substructure (6) in a swivelling range (S), **characterized in that** the pivot bearing (5, 5') is of sealed design and - in order to compensate for forces acting on the plate (2) and on the bearing (5, 5') - is arranged spaced apart at a maximum of a quarter of the distance (D) from the gravity axis (7) of the plate (2), which axis runs between the first and second longitudinal edges and essentially parallel to the longitudinal edges (3, 4).

2. Protective element (1) according to Claim 1, **characterized in that** a first surface (8) of the plate (2) is designed such that it can be walked on or travelled over.

3. Protective element (1) according to Claim 1, **characterized in that** solar collectors (10) are arranged on a first surface (8) or second surface (9) of the plate (2).

4. Protective element (1) according to one of the preceding claims, **characterized in that** the plate (2) includes side edges (11, 11') along which sealing elements (12) are arranged in such a manner that the plate (2) can enter into an essentially water-tight connection with a directly adjacent plate (2) or constructional unit (13).

5. Device for protecting against floods or avalanches, having a substructure (6), **characterized in that** at least one protective element (1) according to one or more of Claims 1 to 4 is arranged on the substructure by means of the pivot bearing (5, 5').

6. Device according to Claim 5, **characterized in that** the entire swivelling range (S) of the protective element (1) covers an angle of between 10° and 200°.

7. Device according to Claim 5 or 6, **characterized in that** the entire swivelling range (S) of the protective element (1) covers an angle of between + 100° and -100°, starting from an inoperative position.

8. Device according to Claim 5, 6 or 7, **characterized in that** the entire swivelling range (S) of the protective element (1) is greater than 90°.

9. Device according to one of Claims 5 to 8, **characterized in that** the plate (2) is operatively connected to a driving device (14) for moving the plate.

10. Device according to one of Claims 5 to 9, **characterized in that** it has locking means (15, 15') with which the plate (2) can be locked in any desired swivelling position with respect to the substructure (6).

11. Device according to one of Claims 5 to 10, **characterized in that** it includes a channel (16, 16') for supplying and removing media and/or liquids, and also for maintenance and operational purposes.

12. Device according to Claim 11, **characterized in that** the channel (16, 16') surrounds at least part of the swivelling range (S) of the plate (2).

13. Device according to Claim 11 or 12, **characterized in that** a manually or motor operated driving device (14) for moving the plate (2) is arranged in the channel (16, 16') or in or on the pivot bearing (5, 5').

14. Device according to Claim 11, 12 or 13, **characterized in that** the channel (16) surrounds at least part of the plate (2) and the driving device (14) in every swivelling position in such a manner that the channel is essentially sealed off.

15. Device according to one of Claims 5 to 14, **characterized in that** the plates (2) are arranged in a row in such a manner that they form, by swivelling, a protective wall against floods or avalanches.

16. Device according to one of Claims 5 to 14, **characterized in that** the plates (2) are arranged in two or more rows in such a manner that they form, by swivelling, two or more protective walls against floods or avalanches.

17. Method for protecting an area against floods or avalanches, according to which a protective element, in accordance with one or more of Claims 1 to 4, or a number of protective elements of this type, which element or elements is/are arranged on a device for protecting against floods or avalanches in accordance with one of Claims 5 to 16, is swivelled about a pivot bearing (5, 5') into a protective position in which in each case a second surface (9) of the plate (2) or of the plates (2) bears against a part (17, 17') of a substructure (6) of the device in such a manner that the forces, which the flood or the snow can exert on a further surface (8, 18) of the plate, are transmitted essentially uniformly to the part (17, 17') of the substructure (6).

18. Method according to Claim 17, **characterized in that** the one plate (2) or a number of plates (2) are swivelled into the protective position automatically or via an early warning system.

19. Method according to Claim 17 or 18, **characterized in that** a number of plates (2) are connected to one another and are swivelled together into the protective position.

## Revendications

1. Elément de protection (1) avec une plaque (2) présentant une première arête longitudinale (3) et une deuxième arête longitudinale (4) écartées d'une distance (D) entre elles et comportant un coussinet de pivotement (5, 5') pour la transmission de forces disposé essentiellement en parallèle à la première arête longitudinale et/ou à la deuxième arête longitudinale avec lequel la plaque (2) peut être disposée sur une construction porteuse (6) pour l'absorption de forces agissant sur l'élément de protection, en particulier sur un dispositif de protection contre les crues et avalanches et en face de cette construction porteuse (6) de manière mobile dans une plage de pivotement (S), **caractérisé en ce que** le coussinet de pivotement (5, 5') fait étanchéité et - afin de compenser les forces s'exerçant sur la plaque (2) et le coussinet (5, 5') - qu'il est disposé écarté au maximum d'un quart de la distance (D) de l'axe de pivotement (7) essentiellement parallèle aux arêtes longitudinales (3, 4) de la plaque (2) entre la première et la deuxième arête longitudinale.

2. Elément de protection (1) selon la revendication 1, **caractérisé en ce qu'**une première surface (8) de la plaque (2) est praticable ou carrossable.

3. Elément de protection (1) selon la revendication 1, **caractérisé en ce que**, sur une première (8) et une seconde (9) surfaces de la plaque (2), des capteurs solaires (10) sont disposés.

4. Elément de protection (1) selon l'une des revendications précédentes, **caractérisé en ce que** la plaque (2) comporte des arêtes latérales (11, 11') le long desquelles des éléments d'étanchéité (12) sont disposés de sorte que la plaque (2) puisse entrer en liaison pour l'essentiel étanche à l'eau avec une plaque (2) ou avec une unité de construction (13) directement juxtaposées.

5. Dispositif de protection contre les crues ou avalanches avec une structure porteuse (6), **caractérisé en ce qu'**au moins un élément de protection (1) selon une ou plusieurs des revendications 1 à 4 est disposé à l'aide d'un coussinet pivotant (5, 5') sur la structure portante.

6. Dispositif selon la revendication 5, **caractérisé en ce que** la totalité de la plage de pivotement (S) de l'élément de protection (1) comprend un angle entre 10° et 200°.

7. Dispositif selon une des revendications 5 ou 6, **caractérisé en ce que** la totalité de la plage de pivotement (S) de l'élément de protection (1) comprend un angle entre +100° et -100° en partant d'une position de repos.

8. Dispositif selon une des revendications 5, 6 ou 7, **caractérisé en ce que** l'ensemble de la plage de pivotement (S) de l'élément de protection (1) est supérieur à 90°.

9. Dispositif selon une des revendications 5 à 8, **caractérisé en ce que** la plaque (2) est liée en action avec un dispositif d'entraînement (14) pour actionner la plaque.

10. Dispositif selon une des revendications 5 à 9, **caractérisé en ce qu'**il présente des moyens de blocage (15, 15') avec lesquels la plaque (2) peut être bloquée par rapport à la construction porteuse (6) dans une quelconque position de pivotement.

11. Dispositif selon une des revendications 5 à 10, **caractérisé en ce qu'**il comporte un canal (16, 16') pour l'amenée ou l'évacuation de fluides et/ou liquides ainsi que pour des fins de maintenance et de commande.

12. Dispositif selon la revendication 11, **caractérisé en ce que** le canal (16, 16') entoure au moins une partie de la plage de pivotement (S) de la plaque (2).

13. Dispositif selon la revendication 11 ou 12, **caractérisé en ce qu'**un dispositif (14) à entraînement manuel ou motorisé pour actionner la plaque (2), est disposé dans le canal (16, 16') ou sur le coussinet pivotant (5, 5').

14. Dispositif selon une des revendications 11, 12 ou 13, **caractérisé en ce que** le canal (16), dans chaque position de pivotement entoure au moins une partie de la plaque (2) et le dispositif d'entraînement (14) de sorte que le canal est pour l'essentiel fermé.

15. Dispositif selon une des revendications 5 à 14, **caractérisé en ce que** les plaques (2) sont disposées en une rangée de sorte qu'en pivotant elles forment une paroi de protection contre les crues ou les avalanches.

16. Dispositif selon une des revendications 5 à 14, **caractérisé en ce que** les plaques (2) sont disposées en deux ou plusieurs rangées de sorte qu'en pivotant, elles forment une ou plusieurs parois de protection contre les crues ou les avalanches.

17. Procédé de protection d'une région contre les crues ou les avalanches selon lequel un élément de protection selon une ou plusieurs des revendications 1 à 4 ou un nombre de tels éléments de protection disposé(s) sur un dispositif de protection contre les crues ou les avalanches selon une des revendications 5 à 16, est pivoté autour d'un coussinet de pivotement (5, 5') dans une position de protection dans laquelle une seconde surface (9) de la plaque (2) ou des plaques (2) appuie sur une partie (17, 17') d'une structure porteuse (6) de sorte que les forces que la crue ou la neige peuvent exercer sur une autre surface (8, 18) de la plaque sont pour l'essentiel régulièrement transmises à la partie (17, 17') de la structure porteuse (6).

18. Procédé selon la revendication 17, **caractérisé en ce qu'**une plaque (2) ou un nombre de plaques (2) est automatiquement ou par un système d'alerte anticipée pivoté en position de protection.

19. Procédé selon une des revendications 17 ou 18, **caractérisé en ce qu'**un nombre de plaques (2) sont reliées entre elles et pivotées ensemble en position de protection.
